(19) Europäisches Patentamt
European Patent Office
Office européen des brevets

(11) **EP 1 764 628 A2**

(12) **EUROPEAN PATENT APPLICATION**

(43) Date of publication:
**21.03.2007 Bulletin 2007/12**

(51) Int Cl.:
**G01S 13/93** (2006.01)    **G08G 5/04** (2006.01)

(21) Application number: **06120989.6**

(22) Date of filing: **20.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.09.2005 US 231356**

(71) Applicant: **Honeywell International Inc.**
**Morristown, New Jersey 07962 (US)**

(72) Inventors:
• **Fregene, Kingsley O.C.**
  **Andover, MN 55304 (US)**
• **Borelli, Francesco**
  **80027, Frattamaggiore (IT)**
• **Subramanian, Dharmashankar**
  **Elmsford, NY 10523 (US)**

(74) Representative: **Haley, Stephen**
**Gill Jennings & Every LLP**
**Broadgate House**
**7 Eldon Street**
**London EC2M 7LH (GB)**

(54) **A system and method of collision avoidance using an invarient set based on vehicle states and dynamic characteristics**

(57)    A method to provide and implement a collision avoidance system for a vehicle. The method includes receiving a buffer zone boundary input defining a buffer zone at an on-board processor in the vehicle from a controlling supervisor, calculating a positively invariant set based on vehicle states and dynamic characteristics, the positively invariant set operable to define a protection zone enclosed within the buffer zone and centered about the vehicle, determining an object is traversing the buffer zone boundary; and implementing an emergency maneuver procedure after a collision avoidance maneuver fails, wherein the object does not enter the protection zone.

**Figure 1**

**Description**

The present invention relates to collision avoidance systems and in particular to a collision avoidance system including emergency maneuvers in the event that collision avoidance maneuvers fail.

When vehicles are traveling in flight formation, the potential for collisions is greater than that for vehicles traveling solo or at a great distance from other vehicles. The higher the speed of the vehicles in the flight formation, the greater the danger of collision in the flight formation in the event that one vehicle strays from the intended flight path of the flight formation. Thus, vehicles traveling in a flight formation typically include collision avoidance systems of one form or another. For many autonomous vehicle applications, envisaged collision avoidance systems use collision avoidance constraints, which are translated into a minimization of the barrier functions or potential functions when a vehicle travels in a direction leading to collision with another vehicle in the flight formation. The collision avoidance constraints assume the straying vehicle has infinite maneuverability, since they do not take into account real-world limitations in actuation authority, acceleration and velocity for the straying vehicle. Since no vehicles have infinite maneuverability, such collision avoidance systems are not failure-proof.

In an exemplary case, the vehicles are manned jets. The human pilot in this case also assists in collision avoidance by guiding the plane in response to the movement of the surrounding planes in the flight formation. However, there is a move by the military to use unmanned aerial vehicles (UAVs) in scouting missions and in some combat situations.

The potential for collisions between an unmanned vehicle traveling solo and an object such as tree or a mountain are greater than that of manned vehicles flying solo. Groups of UAVs in formation can provide valuable wide area sensing information to soldiers, but the UAVs then need to avoid other nearby UAVs as well as objects in the terrain and/or airspace. To do this, the UAVs primarily depend upon the collision avoidance system (which can fail). UAVs that go down, owing to collision, pose a risk to the safety of the soldiers who depend on the UAV. If the solders do not receive the necessary information from a scouting UAV, they will be more vulnerable in the battlefield. Additionally, the soldiers are placed at higher risk if classified data from a downed UAV is obtained by the enemy. Moreover, autonomous UAVs that either have no collision avoidance systems or are only equipped with (failure-prone) primary collision avoidance systems pose a significant hazard to other manned vehicles operating in the same air space.

Current mission planning for multiple air vehicles operating in the same airspace is done centrally and in an a priori manner. Any effort to generate collision-free paths for teams of vehicles on-the-fly in a centralized manner would require rapid solutions to large, non-convex optimization problems which places a significant computational burden on the centralized controller/planner and presents a single point of failure for the whole system. This problem grows with the number of vehicles. Although decentralized control/planning techniques hold great promise for generating collision-free paths that do not have the short-comings identified above, they provide no collision avoidance guarantees.

For the reasons stated above, there is a need to develop failure-proof collision avoidance systems. The failute-proof collision avoidance systems are needed for solo, as well as for unmanned vehicles traveling as part of a coordinated multi-vehicle team and in a flight formation. There is also a need to decentralize the control and invocation of collision avoidance maneuvers for unmanned vehicle teams.

One aspect of the present invention provides a method to provide and implement a collision avoidance system for a vehicle. The method includes receiving a buffer zone boundary input defining a buffer zone at an on-board processor in the vehicle from a controlling supervisor. The method also includes calculating a positively invariant set based on vehicle states and dynamic characteristics. The positively invariant set defines a protection zone that is enclosed within the buffer zone and centered about the vehicle. The method also includes determining if an object is traversing the buffer zone boundary and initiating an emergency maneuver procedure after a primary collision avoidance maneuvers fail. The outcome is that the object does not enter the protection zone due to the emergency maneuver.

Another aspect of the present invention provides a collision avoidance system for a vehicle. The system includes an external processor, an on-board processor, a vehicle controller and sensors. The external processor is operable to compute a positively invariant set based on a vehicle states and dynamic characteristics and to up-load the positively invariant set to the on-board processor. The positively invariant set defines a protection zone. The on-board processor is operable to receive the positively invariant set from the external processor and to store data defining a buffer zone boundary of the vehicle, wherein the protection zone is enclosed within the buffer zone boundary. The vehicle controller and sensors are in communication with the on-board processor. The sensors detect objects within the buffer zone boundary. The on-board processor transmits an emergency maneuver command to the vehicle controller if the sensors detect an object within the buffer zone boundary for more than a preset threshold time. The vehicle controller then implements an emergency maneuver procedure, wherein during the emergency maneuver procedure, the vehicle stays within its protection zone.

Yet another aspect of the present invention provides a decentralized collision avoidance system for vehicles moving in a coordinated operation. The system includes means to compute an invariant set of initial velocities from which the vehicles can stop within a protection zone based on vehicle states and dynamic characteristics, means to program decentralized controllers in respective vehicles with the invariant set to provide a protection zone centered about each vehicle and means to switch a vehicle into an emergency maneuver mode in the event that an object enters the buffer zone and stays there for more than a preset threshold time.

Yet another aspect of the present invention provides a decentralized collision avoidance system for vehicles moving in a flight formation. The system includes means to compute an invariant set of initial velocities from which the vehicles can stop within a protection zone based on vehicle states and dynamic characteristics, means to program decentralized controllers in respective vehicles with the invariant set to provide a protection zone centered about each vehicle and means to switch a vehicle into an emergency maneuver mode in the event that an object enters the buffer zone and stays there for more than a preset threshold time.

The present invention can be more easily understood and further advantages and uses thereof more readily apparent, when considered in view of the description of the preferred embodiments and the following figures, in which like references indicate similar elements, and in which:

Figure 1 is a method of providing and implementing a collision avoidance system in accordance with one embodiment of the present invention;

Figure 2 is a method of providing an emergency maneuver command in accordance with one embodiment of the present invention;

Figure 3 is a method of implementing an emergency maneuver procedure in accordance with one embodiment of the present invention;

Figure 4 is a block diagram of a decentralized collision avoidance system in accordance with one embodiment of the present invention;

Figure 5 is a schematic diagram of zones for a vehicle operable in a collision avoidance system in accordance with a first embodiment of the present invention;

Figure 6 is a schematic diagram of zones for a vehicle operable in a collision avoidance system in accordance with a second embodiment of the present invention;

Figures 7A-7D are schematic diagrams of the vehicle of Figure 6 initially on a collision path with an object at various times during an implementation of the collision avoidance system in accordance with one embodiment of the present invention;

Figures 8A-8B are schematic diagrams of a plurality of vehicles of Figure 6 in flight formation avoiding a collision with objects in accordance with one embodiment of the present invention; and

Figures 9A-9D are schematic diagrams of the vehicles of Figure 8B at various times during an implementation of the collision avoidance system in accordance with one embodiment of the present invention.

In the following detailed description, reference is made to the accompanying drawings, which form a part hereof, and in which is shown by way of illustration specific embodiments in which the invention may be practiced. These embodiments are described in sufficient detail to enable those skilled in the art to practice the invention. The following detailed description is not to be taken in any limiting sense and the scope of the present invention is defined only by the claims and equivalents thereof.

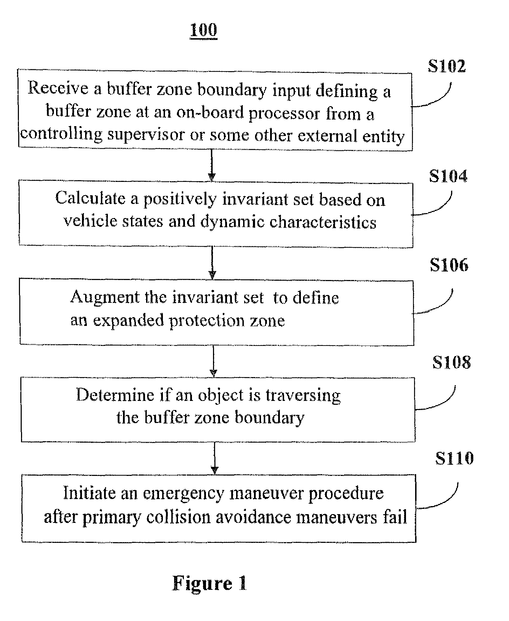

The methods 100-300 described with reference to Figures 1-3, respectively, together provide details of the method for providing and implementing a collision avoidance system for a vehicle. The methods 100-300 are applicable to vehicles moving alone or in a group. Vehicles moving in a group are defined herein as moving in a flight formation or in coordinated motion to attain some common objective. If the vehicle is one of a plurality of vehicles in a flight formation, the collision avoidance system described herein is a decentralized collision avoidance system. Flight formation boundaries and/or configurations may be set a priori (e.g. by a controlling supervisor) and up-loaded to the vehicles. However, the controlling supervisor does not initiate the collision avoidance system in the event of an impending collision. The vehicle is either an autonomous vehicle operating completely under computer control or a semi-autonomous vehicle operating with minimal human control. The vehicle is either a vehicle moving on land, a vehicle moving in water, a vehicle moving under-water, a vehicle moving in space or a vehicle moving in air. Thus, the flight formation of a plurality of vehicles is formed on land, in water, under-water, in space or in air. The processors, the controllers and/or the sensors described herein have stored in computer readable medium at least one computer program including computer readable code to perform the operations described with reference to methods 100-300 of Figures 1-3. The commands are transmitted from one device or processor via electrical or wireless connections as is known in the art.

Figure 1 is a method 100 of providing and implementing a collision avoidance system in accordance with one embodiment of the present invention. During stage S102, an on-board processor receives a buffer zone boundary input defining a buffer zone from a controlling supervisor or some other suitable external entity. The buffer zone boundaries are computed based on consideration of the vehicle dynamical characteristics and the function of the vehicle when the buffer zone boundary is in force. For example, if the vehicle is an unmanned aerial vehicle (UAV) and is going to be flown in a flight formation with a plurality of like UAVs, the buffer zone around each vehicle is determined in advance. There are several techniques known in the art to determine the buffer zone for a vehicle and to design vehicle controllers to enforce such a zone. The buffer zone is typically centered about the vehicle.

During stage S104, an external processor calculates a positively invariant set based on the vehicle states and dynamic characteristics and uploads the positively invariant set to an on-board processor in communication with the vehicle controller. The invariant set defines a protection zone centered at the vehicle that moves with the vehicle. The protection zone is enclosed within the buffer zone boundary. As defined herein, a set is an invariant set for the vehicle dynamical system if every vehicle trajectory which starts from a point within the set remains in the set for all subsequent time. The set admits a closed loop control system and admissible subsets of control inputs, which result in system trajectories that stay within the set for all future time. If the members of the set evolve from an initial state and remain within the set for all subsequent time, the set is positively invariant.

When the emergency constraints, which include maximum vehicle acceleration, minimum vehicle acceleration, maximum vehicle speed and minimum vehicle speed, are the control inputs applied to the vehicle, the states evolves in such a way that they remain within the closed set over all future time. Thus, this set associated with the emergency constraints of the vehicle is positively invariant.

Specifically, assume the following discrete-time dynamic system is given

$$x_{k+1} = f(x_k, u_k) \tag{1}$$

where $x_k$ is the system state at the k-th instant and $u_k$ is the control input at the k-th instant. The system is subject to constraints on the control inputs and the states

$$u_k \in U \subset R^m \tag{2a}$$

$$x_k \in X \subseteq R^n \tag{2b}$$

The set $U$ is compact, while $X$ is closed. It is assumed that the system and the constraints are time-invariant.

An admissible control input, sequence or law is one which satisfies the input constraints $U$. A subset of a given set that is compatible with the input and the output constraints is an input admissible set.

If the system is in closed-loop with the control law

$$u_k = c(x_k) \tag{2c}$$

then the input admissible set is the subset of a given set $\Omega$ in which the control law satisfies the input constraints.

For the set $\Omega$ having a control law $u_k = c(x_k)$, the input admissible subset of $\Omega \subseteq R^n$ is given by

$$\Omega^c \overset{\Delta}{=} \{x_k \in \Omega \mid c(x_k) \in U\} \tag{3a}$$

The closed-loop system is given by

$$x_{k+1} = f(x_k, c(x_k)) \qquad (3b)$$

and the constraints on the state can be replaced by

$$x_k \in X^c \overset{\Delta}{=} \{x_k \in X \mid c(x_k) \in U\} \qquad (3c)$$

Note that if the constraints on the input $U$ are given as a hyper-rectangle and the control law is given by an appropriate saturation function, then $\Omega^c = \Omega$ if the control law is defined over $\Omega$. If the system is a linear time invariant system and $u_k = sat(Kx_k)$, then the resulting closed-loop system can be treated as a piecewise affine system. The description of systems without control inputs also apply to closed-loop systems, as long as the input admissible subset replaces the state constrains, if necessary.

For a given set $\Omega$ in the state-space and an initial state $x_0 \in \Omega$ to be a positively invariant set, the system must remain inside the set $\Omega$ for all time. Specifically, the set $\Omega \subset R^n$ is positively invariant for the system $x_{k+1} = f(x_k)$ with reference to methods 100-300 of Figures 1-3, if and only if $\forall x_0 \in \Omega$, the system evolution satisfies $x_k \in \Omega$, $\forall k \geq 0$. Specifically, $\Omega$ is positively invariant if and only if:

$$x_k \in \Omega \Rightarrow x_{k+1} \in \Omega \qquad (4)$$

The union of two positively invariant sets is positively invariant; however, the intersection of two positively invariant sets is not positively invariant. Numerical computation of the invariant sets makes use of the Pontryagin Difference and the Minkowski sum as known in the art.

When applying the above set-theoretic algorithms in a calculation of the invariant set associates for a collision avoidance system of a vehicle, the state and the input of the vehicle are constrained based on the physics of the problem. Two types of constraints are considered. The first constraint type includes the constraints under normal operation of the vehicle, herein called the nominal constraints. The second constraint type includes the constraints under an emergency operation of the vehicle, herein called the emergency constraints. The nominal constraints are more restrictive than the actual operating limits of the vehicle, since maximum performance is used for a vehicle only in emergency situations.

The nominal constraints are described mathematically as:

$$x_{vel} \in X_v,$$
$$u \in U. \qquad (5)$$

The emergency constraints are described mathematically as:

$$x_{vel} \in X_v^{ER};$$
$$u \in U^{ER}. \qquad (6)$$

For a single vehicle and an on-board processor in a state-feedback emergency control situation

$$u_k = c(x_k, r_e) \tag{7}$$

controls the vehicle to a chosen reference $r_e$ under the constraints of equation (1). The time when an emergency maneuver procedure starts is denoted as $t_e$. The closed loop vehicle dynamics during the emergency maneuver procedure are

$$x_{k+1} = f(x_k, c(x_k, r_e)) \tag{8}$$

The on-board processor provides reference commands $r_e$ to the vehicle controller $c(x_k, r_e)$ in order to achieve objectives that depend on the type of vehicle and on its mission. An emergency maneuver procedure includes a hover maneuver, a move in a circle maneuver, a stop maneuver, and combinations thereof and is initiated by a respective hover command, a move in a circle command, a stop command, and combinations thereof sent from an on-board processor to a vehicle control in the vehicle.

In an exemplary case, the vehicle is a hover-capable vehicle, such as a helicopter and the emergency maneuver procedure is a stop that begins at time $t_e$ and brings the vehicle to a full stop with zero terminal speed at the position it had at time $t_e$, that is $r_e = [x_{t_e,pos}, x_{t_e,vel}]$, where states $x_{t_e,pos}$ correspond to the reference position output values and the states $x_{t_e,vel}$ correspond to zero velocities at that position.

The protection zone $y_p^{ER} \subset R^3$, centered at $y_{te,pos}$, is a polytope in the x, y, z space containing the vehicle position during emergency maneuver procedures. To guarantee this property, an external processor computes the set $\Xi(t_e) \in R^9$ of vehicle states for any time $t_e$ such that the position outputs of the closed loop dynamics (8) for $k \geq t_e$ and $x_{t_e} \in \Xi(t_e)$ lie in the protection zone $y_p^{ER}$. $\Xi(t_e)$ is a positively invariant set of system (8) subject to constraints on input commands and velocity states (6) and on position defined by $y_p^{ER}$.

$$x \in \Xi(t_e) \Leftrightarrow x_{vel} \in X_v^{ER}, c(x) \in U^{ER}, y_{pos} \in y_p^{ER}(t_e), \tag{9}$$

$$h(f(x, c(x))) \in \Xi(t_e) \quad \forall t \geq t_e$$

If the emergency maneuver procedure (7) is started when all the states are in $\Xi(t_e)$, the vehicle is guaranteed to satisfy the emergency constraints on input commands and velocities and to stay within the protection zone $y_p^{ER}$.

If $C(X)$ is a linear state-feedback controller, then $\Xi(0)$ is computed with simple techniques using polyhedral manipulations and by exploiting our knowledge of the fact that the set $\Xi(k)$ is a translation of the set $\Xi(0)$ to the position $y_{k,pos}$ as is known in the art. In one embodiment, the positively invariant set is based on the vehicle states and dynamic characteristics and is up-loaded to the on-board processor in the vehicle at this point. In this case, stage S106 does not occur and the flow of method 100 proceeds to stage S108.

During stage S106, the processor in communication with the vehicle controller augments the invariant set to define an expanded protection zone. Once $\Xi$ has been computed as described above with reference to stage S104, to guarantee the vehicle performs the emergency maneuver procedure within the protection zone, the nominal constraints (5) are augmented with the constraint.

$$x_k \in \Xi(k) \tag{10}$$

to ensure the maneuvers always start from within $\Xi$.

An exemplary double integrator vehicle model is used along each spatial dimension to illustrate the concept. The states are position and velocity. The control input is the acceleration and the limits are given as:

$$y_{pos} \in y_p^{ER}(t_e) = \{ z \in R^3 \mid -5\,ft \le y_{t_e,pos} - z_i \le 5\,ft, i = 1,2,3 \},$$

$$x_{vel} \in X_v^{ER} = \{ z \in R^3 \mid -10\,ft \le z_i \le 10\,ft, i = 1,2,3 \},$$

$$u \in U^{ER} = \{ z \in R^3 \mid -3\,ft \le z_i \le 3\,ft, i = 1,2,3 \}. \tag{11}$$

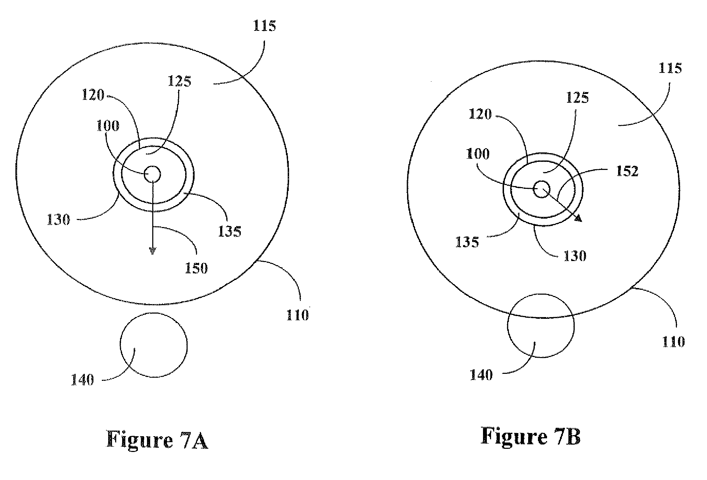

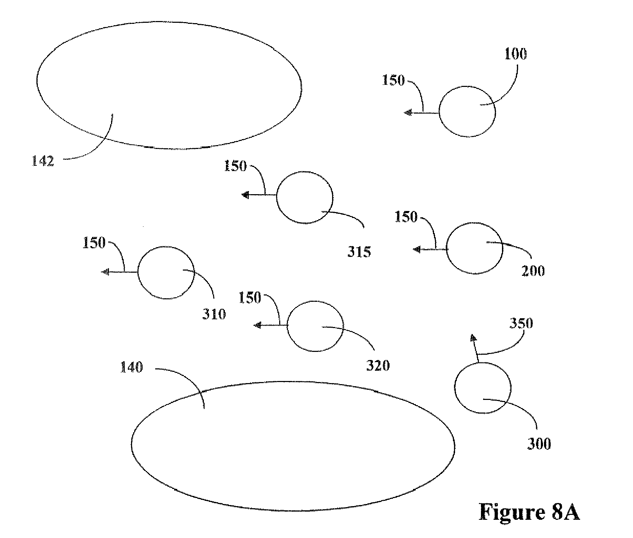

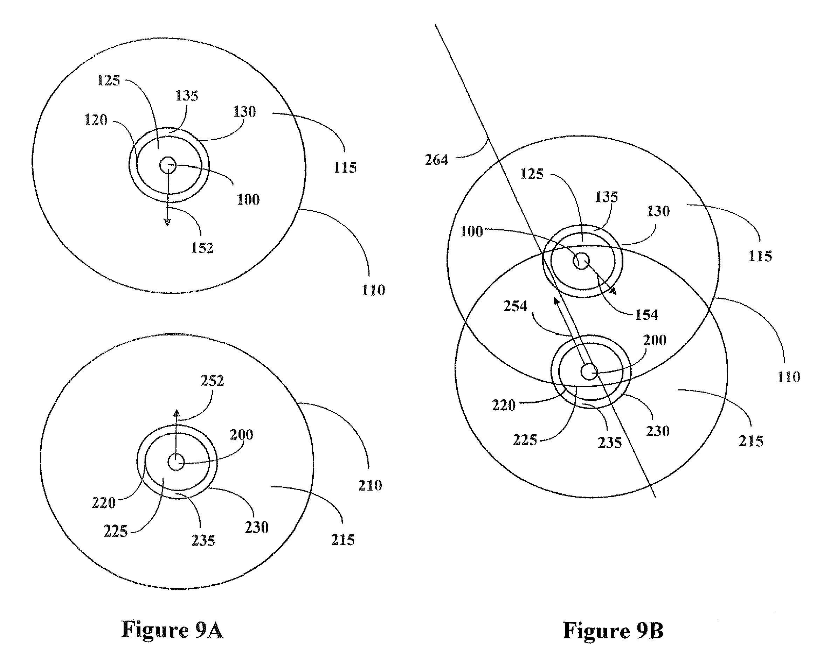

A linear quadratic regulator is the emergency controller. The trajectories of the vehicle performing the emergency maneuver procedures lie in the set $\Xi(t_e)$ if at the time $t_e$ the state of the vehicle $X_{t_e}$ belongs to the set $\Xi(t_e)$. Since $\Xi(t_e)$ is centered at $y_{t_e}, pos$, constraint (10) becomes $x_{t_e,vel} \in \Xi_v, \Xi_v = \{ x_{vel} \in R^3 \mid (\vec{0}, x_{vel}) \in \Xi$ The set $\Xi_v$ constrains the speed of the vehicle to lie within bounds from which an emergency stop can be accomplished without violating $y_p^{ER}$. $\Xi$ is a polyhedron and therefore $\Xi_v$ is also a polyhedron. The size of $\Xi_v$ is a function of $y_p^{ER}, X_v^{ER}$ and $U^{ER}$ By analyzing the results of this exemplary case, it is noted that the bigger $U^{ER}$ is, the faster the vehicle stops, which leads to a bigger set $\Xi_v$ from which the vehicle stops in $\Xi(t_e)$. The smaller the protection zone $y_p^{ER}$ is, the smaller the set of initial velocities becomes from which the vehicle can stop in $\Xi(t_e)$. This is a formalized mathematical tool to determine the trade-off between the nominal vehicle speed limits and the extent to which vehicles are able to accelerate and decelerate. The invariant set $\Xi(t_e)$ is applicable to vehicles flying separately as described below with reference to Figures 7A-7D. Additionally, the invariant set $\Xi(t_e)$ is applicable to vehicles flying in flight formation as described below with reference to Figures 8A-8B and 9A-9D.

Once the external processor has calculated the augmented protection zone (10) for each vehicle using a constraint based on the emergency maneuver invariant set to establish protection zones larger than $\Xi(k)$, the data is uploaded to an on-board processor in the vehicle or vehicles. The vehicles are then operable to switch to an emergency maneuver mode and implement an emergency maneuver procedure when normal collision avoidance schemes fail to resolve conflicts,

During stage S 108, the on-board processor determines that an object is traversing the buffer zone boundary. The data defining the boundary is stared in a memory (not shown) of the on-board processor in the vehicle. Sensors in communication with the on-board processor are operable to sense objects and to transmit the input to the on-board processor. The on-board processor analyzes the data from the sensors and determines if an object is traversing the buffer zone boundary.

In one embodiment, smart sensors in a sensor network are operable to determine that one or more objects are within the buffer zone boundary and to transmit a warning input to the on-board processor. The on-board processor triggers the vehicle controller to initiate collision avoidance maneuver, such as an evasive action maneuver.

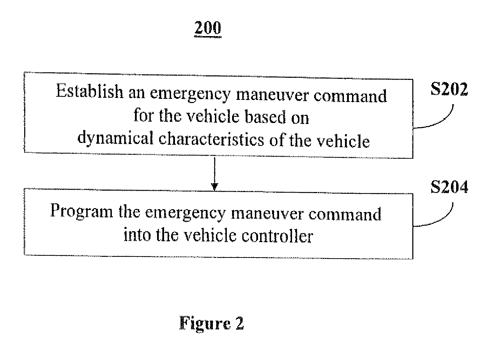

During stage S110, the on-board processor switches the vehicle into an emergency maneuver mode after a primary collision avoidance maneuver fails and initiates an emergency maneuver procedure. The details of determining that a collision avoidance maneuver has failed are described below with reference to method 200 of Figure 2. The on-board processor initiates the emergency maneuver procedure by retrieving an emergency maneuver command from a memory and transmitting the command to the vehicle controller. The vehicle controller then implements the emergency maneuver command by controlling the vehicle hardware in the manner required to make the vehicle respond to the emergency maneuver command. When the emergency maneuver command is implemented, the vehicle remains within its protection zone.

Figure 2 is a method 200 of providing an emergency maneuver command in accordance with one embodiment of the present invention. During stage S202, the external processor establishes an emergency maneuver command for the vehicle based on the dynamical characteristics of the vehicle. The dynamical characteristics of the vehicle include the maximum vehicle velocity, the maximum vehicle acceleration, the vehicle drag coefficient, the vehicle control authority, the vehicle maneuverability, maximum loaded vehicle weight, the maximum unloaded vehicle weight, the minimum vehicle turning radius, the vehicle shape, and the vehicle type. The emergency maneuver command is a hover command, a move in a circle command, a stop command, and combinations thereof depending on the type of vehicle. The external processor up-loads the determined emergency maneuver commands to the on-board processor in the vehicle.

In an exemplary case, the vehicle type is a fixed-wing aircraft and is therefore unable to stop in mid-air like a hover-capable vehicle. Given this vehicle type, the dynamical characteristic of the maximum loaded vehicle weight is used to determine the maximum momentum of a vehicle for a vehicle speed at the maximum of the nominal constraints as described above with reference to stage S104. The external processor uses the dynamical characteristic of the minimum vehicle turning radius, vehicle shape (i.e., wing span) and the calculated maximum momentum to determine the command required for the vehicle to start moving in circles within the protection zone. The fixed-wing plane will then stay within the protection zone that was centered around the vehicle when the emergency maneuver command was received.

During stage S204, on-board processor programs the emergency maneuver command into the vehicle controller. The on-board processor receives the emergency maneuver command instructions from the external processor and embeds the instructions as a program into the vehicle controller as required in order to be able to implement the emergency maneuver procedure with the emergency maneuver command. In one embodiment, the on-board processor, not the external processor, determines the emergency maneuver and generates the emergency maneuver command instructions and embeds the instructions as a program into the vehicle.

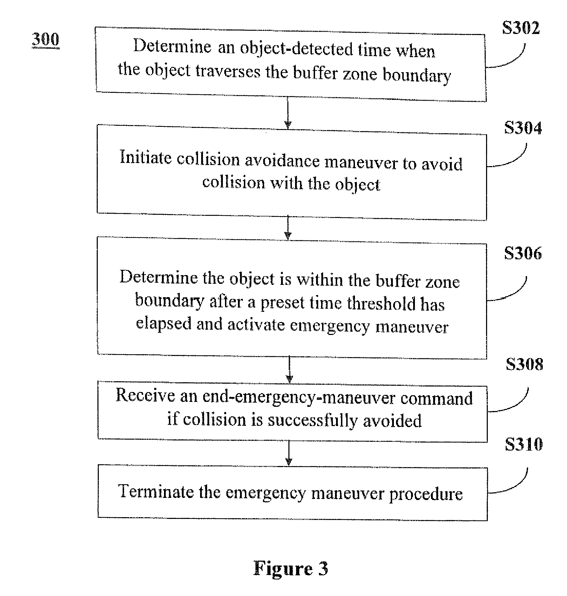

Figure 3 is a method 300 of implementing an emergency maneuver procedure in accordance with one embodiment of the present invention. During stage S302, the on-board processor determines an object-detected time when the object traverses the buffer zone boundary. When the sensors indicate the object is on the buffer zone boundary, the on-board processor sets the time as the objects-detected time, In one embodiment, the on-board processor sets a clock to zero at the object-detected time. In another embodiment, the sensors set the time as the object-detected tame when the object traverses the buffer zone boundary and the sensors transmit the object-detected time to the on-board processor along with the sensed input described above with reference to stage S108 of method 100 in Figure 1.

During stage S304, the vehicle initiates a collision avoidance maneuver to avoid a collision with the object in response to the determination made during stage S108 described above with reference to method 100 of Figure 1 that an object is traversing the buffer zone boundary. The collision avoidance maneuver is taken based on programming in the on-board processor and the vehicle controller and automatically occurs once an object penetrates the buffer zone boundary. Techniques for collision avoidance maneuvers include taking evasive action and methods of implementing collision avoidance maneuvers are known in the art. In one exemplary case, the vehicle is a hover-apable vehicle and the vehicle changes direction of flight to avoid the object that has penetrated the buffer zone boundary. In another exemplary case, a hover-capable vehicle accelerates to avoid the object that has penetrated the buffer zone boundary. In yet another exemplary case, the hover-capable vehicle changes direction of flight and accelerates to avoid the object that has penetrated the buffer zone boundary.

During stage S306, the on-board processor determines that the object is within the buffer zone boundary after a preset time threshold has elapsed since the object-detected time. The on-board processor simultaneously determined that the collision is still impending. The on-board processor has the preset time threshold stored in a memory. When the object-detected time is set as described during stage S302, the on-board processor retrieves the preset threshold time $t_{th}$ and compares the time elapsed since the object-detected time to the preset threshold time $t_{th}$. Other methods for monitoring time are possible, as is known in the art. Simultaneously, the on-board processor analyzes the incoming data from the sensors to determine if the object is still on a collision path with the vehicle or if it is moving away from the vehicle. If the object is still on a collision path with the vehicle and the preset time threshold $t_{th}$ has elapsed since the object-detected time, the on-board processor implements the emergency maneuver procedure.

During stage S308, the on-board processor receives an end-emergency-maneuver command from a controlling supervisor if the collision is successfully avoided. A controlling supervisor is an external controller that oversees the movement of one or more vehicles. In one embodiment, the controlling supervisor is a human overseeing computers that control the movement of semi-autonomous vehicles. In another embodiment, the controlling supervisor is a processor overseeing the movement of autonomous vehicles. The controlling supervisor has input from the one or more vehicles and is able to determine when the collision has been avoided. In one embodiment, the on-board processor determines the collision has been avoided and generates an end-emergency-maneuver command.

During stage S310, the vehicle controller terminates the emergency maneuver procedure responsive to the receiving the end-emergency-maneuver command. The on-board processor determines what instruction the vehicle requires to switch out of the emergency maneuver mode and back to normal operation mode. The on-board processor transmits that instruction to the vehicle controller, which implements the instructions. Thus, the end-emergency-maneuver command switches the vehicle into a normal operation mode after the vehicle has avoided a collision with an object.

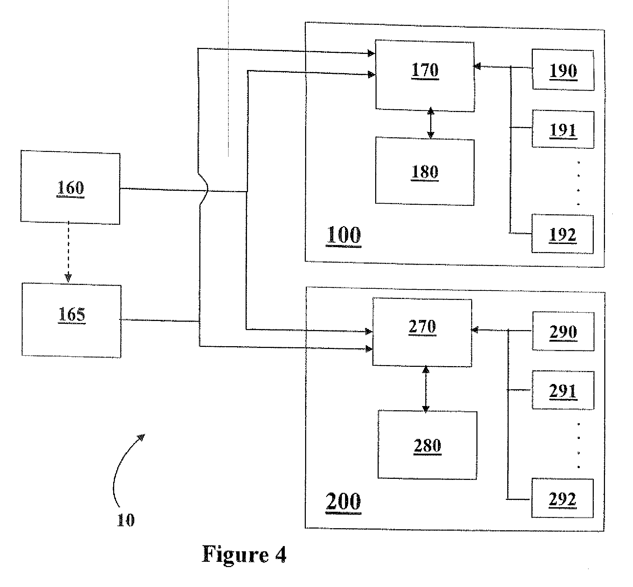

Figure 4 is a block diagram of a decentralized collision avoidance system 10 in accordance with one embodiment of the present invention. The collision avoidance system 10 is operable to implement the methods 100-300 described above with reference to Figures 1-3, respectively. The collision avoidance system 10 includes an external processor 160, a controlling supervisor 165, vehicle 100 and vehicle 200. Vehicle 100 includes an on-board processor 170, a vehicle controller 180, and sensors 190-192. Vehicle 200 includes an on-board processor 270, a vehicle controller 280, and sensors 290-292. Vehicle 100 and vehicle 200 are exemplary of all the vehicles in a flight formation or in some other coordinated multi-vehicle operations.

The external processor 160 computes the positively invariant set for each vehicle 100 and 200 based on their respective states and dynamic characteristics which are uploaded to the on-board processor 170 and on-board processor 270. The controlling supervisor 165 defines the buffer zone boundary for the vehicle in a flight formation or in some other coordinated multi-vehicle operation and up-loads data defining the buffer zone boundary to the on-board processor 170 and on-board processor 270. In one embodiment the external processor 160 is included in the controlling supervisor 165. In another embodiment, the external processor 160 transmits the positively invariant set to the controlling supervisor 165 to ensure that the controlling supervisor 165 defines a buffer zone that enclosed the protection zone of the positively invariant set.

When the on-board processor 170 has the buffer zone boundary and the positively invariant set, which defines the protection zone for the vehicle 100, the vehicle 100 is operable to implement an emergency maneuver procedure in the avoidance system 10 in the event that an object (not shown) or vehicle 200 penetrate the buffer zone boundary of vehicle 100. Sensors 190-192 provide continuous feedback to the on-board processor 170 about the position of objects around the vehicle 100 so that the on-board processor 170 knows if the buffer zone boundary has been breached. In one embodiment, the sensors 190-192 provide periodic feedback to the on-board processor 170.

Likewise, when the on-board processor 270 has the buffer zone boundary and the positively invariant set, which defines the protection zone for the vehicle 200, the vehicle 200 is operable to implement the emergency maneuver procedure of the collision avoidance system 10 in the event that an object (not shown) or vehicle 100 penetrate the buffer zone boundary of vehicle 200. Sensors 290-292 provide continuous feedback to the on-board processor 270 about the position of objects around the vehicle 200 so that the on-board processor 270 knows if an object has traversed the buffer zone boundary. In one embodiment, the sensors 290-292 provide periodic feedback to the on-board processor 270.

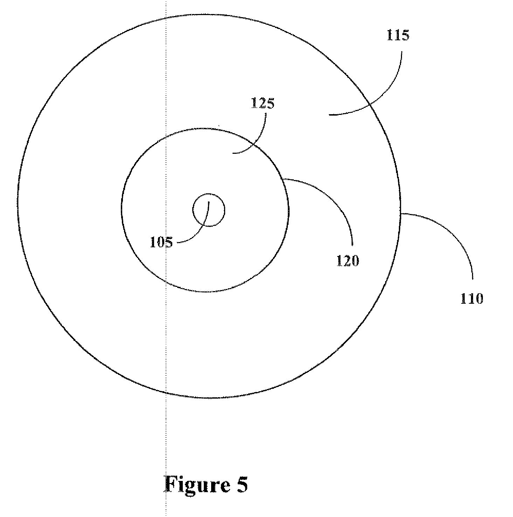

Figure 5 is a schematic diagram of zones for a vehicle 105 having a collision avoidance system 10 in accordance with a first embodiment of the present invention. The vehicle 105 is at the center of a buffer zone boundary 110 which encloses buffer zone 115. The vehicle's protection zone 125 has a protection zone boundary 120 that is concentric with and enclosed within the buffer zone boundary 110.

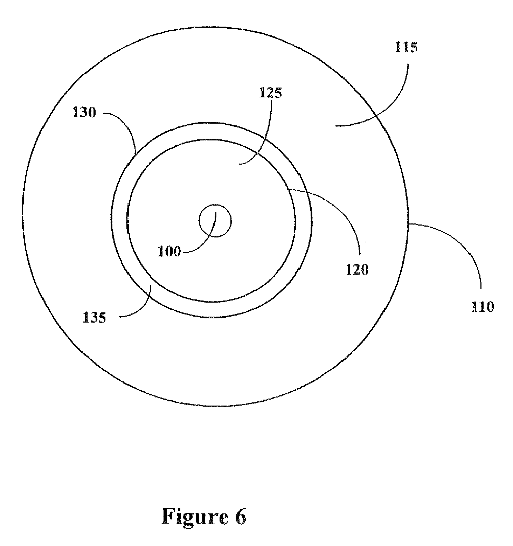

The discussion related to Figures 6-9D is based on the exemplary vehicle 100 and vehicle 200 of Figure 4 in collision avoidance system 10. Figure 6 is a schematic diagram of zones for a vehicle 100 operable in the collision avoidance system 10 in accordance with a second embodiment of the present invention. In this embodiment, the vehicle 100 has the buffer zone 115 and protection zone 125 as described above for vehicle 105 and an additional expanded protection zone 135, that is enclosed within the buffer zone 115 and that encompasses the protection zone 125. The expanded protection zone boundary 130 that defines the limits of the expanded protection zone 135 is concentric with the buffer zone boundary 110 and the protection zone boundary 120.

Figures 7A-7D are schematic diagrams of the vehicle 100 of Figure 6 initially on a collision path with an object 140 at various times during an implementation of the collision avoidance system 10 in accordance with one embodiment of the present invention. Figure 7A shows vehicle 100 at a time t0, when the vehicle 100 is traveling at a velocity indicated as arrow 150 directly towards a stationary object 140. The direction and length of arrow 150 and arrow 152 (Figures 7B-7C) represent, respectively, the direction of travel and the relative speed of the vehicle 100 at different times during the emergency maneuver procedure. At the time $t_0$, the object 140 is outside of the buffer zone boundary 110 and sensors 190-192 on vehicle 100 sense the object 140 is outside of the buffer zone boundary 110.

Figure 7B shows vehicle 100 at a time $t_1$, where $t_1 > t_0$, when the object 140 has traversed the buffer zone boundary 110 and the vehicle 100 has initiated a collision avoidance maneuver and is taking evasive action. The on-board processor 170 (Figure 4) processes data received from sensors 190-192 (Figure 4) to determine that object 140 has traversed the buffer zone boundary 110. Then the on-board processor 170 triggers the vehicle controller 180 to begin a collision avoidance maneuver. As part of the collision avoidance maneuver, vehicle 100 travels more slowly and no longer travels directly towards object 140 as indicated by length and direction of arrow 152. The on-board processor 170 notes the time $t_{em}$ when the object 140 penetrated the buffer zone boundary 110 and initiates a collision avoidance maneuver to avoid collision with the object 140 responsive to the warning indication from the sensor 190-192. The sensors 190-192 continue to send data to the on-board processor 170 about the location of the object 140 as time proceeds.

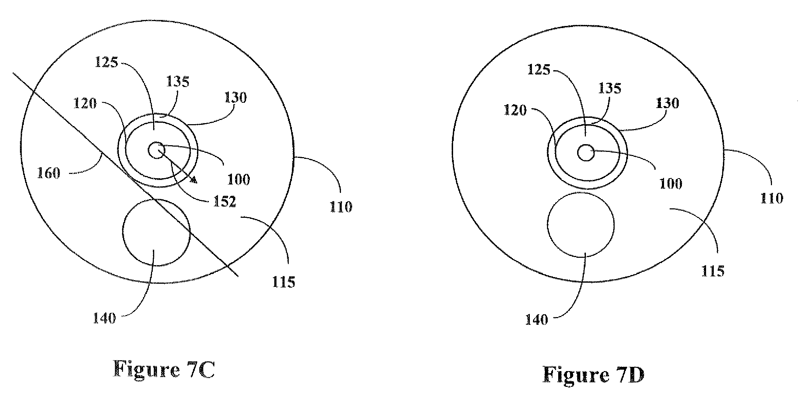

Figure 7C shows vehicle 100 at a time $t_2$, where $t_2 > t_1$, after a preset time threshold $^tth$ has elapsed since the object-detected time and the collision between the object 140 and the vehicle 100 is still impending. Specifically, $t_{em}$ - $t_2 = t_{th}$ and the sensors 190-192 indicate to the on-board processor 170 that the collision is still impending. Line 160 is parallel to the arrow 152, which indicates the direction of travel of the vehicle 100. If the vehicle 100 does not stop, the object 140 will overlap with the extended protection zone 135. Thus at this time t2, the on-board processor 170 transmits an emergency maneuver command to the vehicle controller 180. The vehicle controller 180 receives the emergency maneuver command and implements an emergency maneuver procedure, In an exemplary case, the vehicle 100 is a hover-capable vehicle and the emergency maneuver command is STOP.

Figure 7D shows vehicle 100 at a time $t_3$, where $t_3 > t_2$, and the vehicle 100 has responded to the emergency maneuver command to stop and has stopped. The vehicle 100 stays within the protection zone 125 and is thus, also within the extended protection zone 135. Since object 140 is immobile, a collision is avoided by implementation of the collision avoidance system 10. If the collision avoidance system 10 were implemented with vehicle 105 of Figure 5, the vehicle 105 stays within the protection zone 125 and the collision is avoided even though there is not extended protection zone 135.

Figures 8A-8B are schematic diagrams of a plurality of vehicles 100 of Figure 6 in flight formation avoiding a collision with objects 140 and 142 in accordance with one embodiment of the present invention. The vehicles 300,310,315 and 320 are equivalent to vehicle 100 and vehicle 200 as described above with reference to Figure 4, The vehicles 200, 300, 310, 315 and 320 are equivalent to vehicle 100 as described above with reference to Figure 6, so that each vehicle has an extended protection zone and is operable to switch to an emergency maneuver when normal collision avoidance schemes fail to resolve conflicts.

As shown in Figure 8A, the vehicles 100, 200, 300, 310, 315 and 320 are moving in a flight formation toward two objects 140 and 142 at a time $\tau_0$. The vehicles 100,200,310,315 and 320 are all moving in the same direction and at the same speed as indicated by the arrows 150. Vehicle 300 is moving toward vehicle 200 as indicated by the direction of arrow 350, since buffer zone boundary (not shown) of vehicle 300 has touched object 140 and vehicle 300 is taking the evasive action of a collision avoidance maneuver.

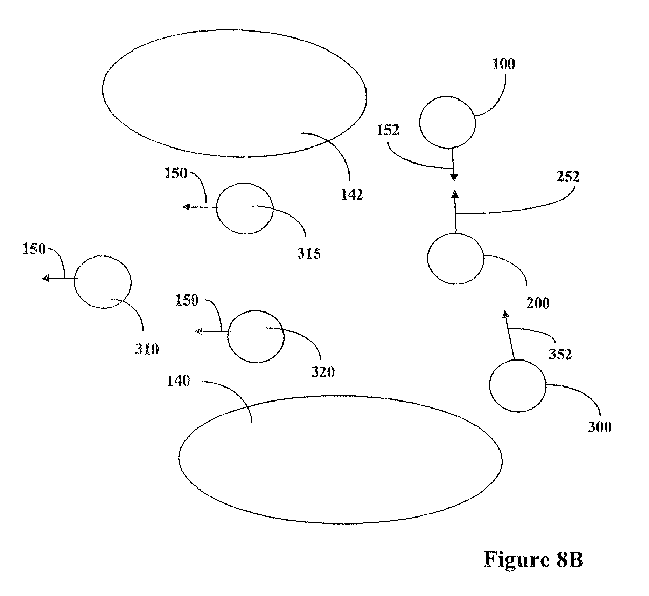

As shown in Figure 8B, the vehicles 310, 315 and 320 are still in a flight formation as they move in the space between two objects 140 and 142 at a time $\tau_1$. The time $\tau_1 > \tau_0$. Vehicle 200 has responded to the movement of vehicle 300 toward it and has taken evasive action away from vehicle 300 and toward vehicle 100 as shown by arrow 252. Vehicle 100 is moving toward vehicle 200 as indicated by the direction of arrow 152, since buffer zone boundary (not shown) of vehicle 100 has touched object 142 and thus vehicle 100 is taking evasive action to avoid collision with object 142. The direction and length of arrow 150 and arrow 252 are representative of the direction of travel of the vehicles 100 and 200 and the relative speed of the vehicles 100 and 200. Thus, vehicle 100 and 200 are moving toward each other at the instant of $\tau_1$

Figures 9A-9D are schematic diagrams the vehicles 100 and 200 starting from the time $\tau_1$ of Figure 8B and at various rimes following the time $\tau_1$ during an implementation of the collision avoidance system 10 (Figure 4) in accordance with one embodiment of the present invention. Figure 9A shows vehicle 100 and vehicle 200 at a time $\tau_0$, when the vehicle 100 is traveling at a velocity indicated as arrow 152 almost directly towards vehicle 200. At the same time vehicle 200 is traveling at a velocity indicated as arrow 252 almost directly towards vehicle 100. The vehicle 100 has not traversed buffer zone boundary 210 and likewise vehicle 200 has not traversed buffer zone boundary 110 so a collision avoidance maneuver has not been initiated by vehicle 100 with respect to vehicle 200. Vehicle 200 is in the process of taking evasive actions from vehicle 300 (Figure 8B). Vehicle 100 is in the process of taking evasive actions from object 142 (Figure 8B).

Figure 9B shows vehicle 100 and vehicle 200 at a time $\tau_1$, just after the vehicle 100 has traversed buffer zone boundary 210 and vehicle 200 has traversed buffer zone boundary 110. Since vehicle 100 and 200 have identical buffer zone boundary radii, vehicle 100 and vehicle 200 traverse buffer zone boundary 210 and buffer zone boundary 110 simultaneously.

In vehicle 100, the sensors 190-192 (Figure 4) transmit data to the on-board processor 170 (Figure 4) that vehicle 200 has traversed the buffer zone boundary 110 and the on-board processor 170 triggers the vehicle controller 180 to begin a collision avoidance maneuver. As part of the collision avoidance maneuver, vehicle 100 is now traveling more slowly and is no longer traveling directly towards object 140 as indicated by length and direction of arrow 154. The on-board processor 170 Boles the time $t_{em}$ when the vehicle 200 penetrated the buffer zone boundary 110 and initiates a collision avoidance maneuver to avoid collision with the vehicle 200 responsive to the warning indication from the sensor 190-192, The sensors 190-192 continue to send data to the on-board processor 170 about the location of the vehicle 200 as time proceeds.

Likewise, the sensors 290-292 (Figure 4) in vehicle 200 inform the on-board processor 270 (Figure 4) that vehicle 100 traversed the buffer zone boundary 210 and the on-board processor 270 triggered the vehicle controller 280 to begin a collision avoidance maneuver. As part of the collision avoidance maneuver, vehicle 200 is now traveling faster and is no longer traveling in the directly towards object 140 as indicated by length and direction of arrow 254. The on-board processor 270 notes the time $t_{em}$ when the vehicle 100 penetrated the buffer zone boundary 210 and initiates a collision avoidance maneuver to avoid collision with the vehicle 100 responsive to the warning indication from the sensor 290-292. The sensors 290-292 continue to send data to the on-board processor 270 about the location of the vehicle 100 as time proceeds. Line 264 is parallel to arrow 234 and is positioned tangentially to vehicle 200. Since line 264 crosses into the protection zone 125 of vehicle 100 it is known that the vehicle 200 will enter the protection zone 125 of vehicle 100 if the velocity of vehicle 200 and vehicle 100 do not change.

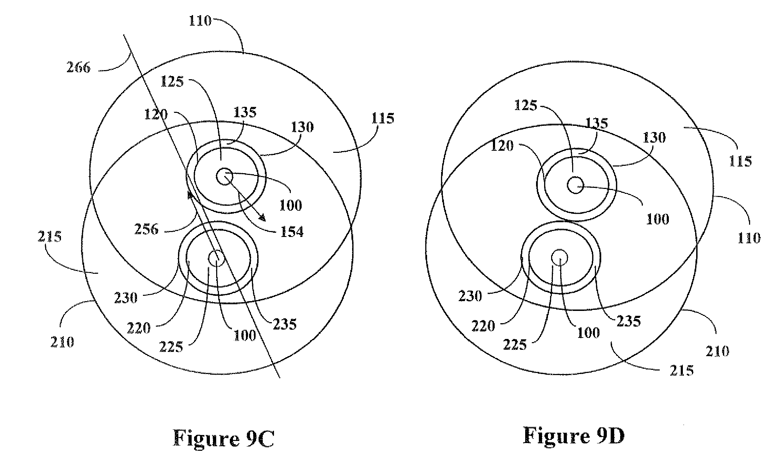

Figure 9C shows vehicle 100 at a time $\tau_2$, where $\tau_2 > \tau_1$, a preset time threshold $t_{th}$ has elapsed since the object-detected time and the collision between the vehicle 200 and the vehicle 100 is still impending. Specifically, $\tau_2 - \tau_{em} = t_{th}$ and the sensors 190-192 indicate to the on-board processor 170 that the collision is still impending. Likewise, the sensors 290-292 indicate to the on-board processor 270 that the collision is still impending.

Line 266 is parallel to the arrow 256, which indicates the direction of travel of the vehicle 200. If the vehicle 100 and vehicle 200 do not stop, vehicle 200 win enter the extended protection zone 135. Thus at time $\tau_2$, in vehicle 100, the on-board processor 170 transmits an emergency maneuver command to the vehicle controller 180. The vehicle controller 180 receives the emergency maneuver command and implements an emergency maneuver procedure. In this exemplary case, the vehicle 100 is a hover-capable vehicle and the emergency maneuver command is STOP. Likewise at time $\tau_2$ in vehicle 200, the on-board processor 270 transmits an emergency maneuver command to the vehicle controller 280. The vehicle controller 280 receives the emergency maneuver command and implements an emergency maneuver procedure. In this exemplary case, the vehicle 200 is a hover-vapable vehicle and the emergency maneuver command is STOP.

Figure 9D shows vehicle 100 at a time $\tau_3$, where $\tau_3 > \tau_2$, and the vehicle 100 and vehicle 200 have responded to the emergency maneuver command to stop and have both stopped, The extended protection zone of vehicle 100 does not overlap at any point with the extended protection zone of vehicle 200. The vehicle 100 slays within the protection zone 125 and is thus, also within the extended protection zone 135. Thus, a collision is avoided by implementation of the collision avoidance system 10 for two vehicles 100 and 200 flying in formation or in some other coordinated multi-vehicle operations. If the collision avoidance system 10 were implemented with vehicle 105 of Figure 5 in the formation, the vehicle 105 stays within the protection zone 125 and the collision is avoided even though there is not extended protection zone 135.

Although specific embodiments have been described herein, it will be appreciated that this application is intended to cover any adaptations and variations of the present invention. Therefore it is manifestly intended that this invention be limited only by the claims and the equivalents thereof.

**Claims**

**1.** A method to provide and implement a collision avoidance system (10) for a vehicle (200), the method comprising:

receiving a buffer zone boundary input defining a buffer zone (115) at an on-board processor (170) in the vehicle (100) from a controlling supervisor (165);
calculating a positively invariant set based on vehicle states and dynamic characteristics, the positively invariant set operable to define a protection zone (125) enclosed within the buffer zone and centered about the vehicle;
determining an object traversing the buffer zone boundary (110); and
initiating an emergency maneuver procedure after primary collision avoidance maneuvers fail, wherein the object (140) does not enter the protection zone.

**2.** The method of claim 1, wherein implementing an emergency maneuver procedure comprises:

determining an object-detected time when the object (140) traverses the buffer zone boundary (110);
initiating a collision avoidance maneuver to avoid collision with the object responsive to the determination; and
determining the object is within the buffer zone boundary after a preset time threshold has elapsed since the object-detected time and the collision is still impending.

**3.** The method of claim 1, further comprising:

augmenting the invariant set to define an expanded protection zone (135), wherein the expanded protection zone is enclosed within the buffer zone (115) and encompasses the protection zone (125), and wherein the object (140) does not enter the expanded protection zone due to implementing the emergency maneuver.

4. The method of claim 1, further comprising:

establishing an emergency maneuver command for the vehicle (105) based on dynamical characteristics of the vehicle (100); and
programming the emergency maneuver command into the on-board processor (170) in the vehicle, wherein the emergency maneuver command is operable to initiate the emergency maneuver procedure.

5. The method of claim 4, wherein the emergency maneuver command is selected from the group consisting of a hover command, a move in a circle command, a stop command, and combinations thereof.

6. The method of claim 1, the method further comprising:

receiving an end-emergency-maneuver command; and
terminating the emergency maneuver procedure responsive to the end-emergency-maneuver command.

7. A collision avoidance system (10) for a vehicle (105), the system comprising:

an external processor (160) operable to compute a positively invariant set based on vehicle states and dynamic characteristics and operable to up-load the positively invariant set to an on-board processor (170) wherein the positively invariant set defines a protection zone (125);
the on-board processor operable to receive the positively invariant set from the external processor and to store data defining a buffer zone boundary (110) of the vehicle, wherein the protection zone is enclosed within the buffer zone boundary;
a vehicle controller (180) in communication with the on-board processor;
sensors (190) in communication with the on-board processor and operable to detect objects (140) within the buffer zone boundary, wherein the on-board processor transmits an emergency maneuver command to the vehicle controller if the sensors detect an object within the buffer zone boundary for more than a preset threshold time, wherein the vehicle controller implements an emergency maneuver procedure and wherein during the emergency maneuver procedure, the vehicle stays within the protection zone.

8. The system (10) of claim 7, the system further comprising:

a controlling supervisor (165) operable to transmit an end-emergency-maneuver command to the vehicle, wherein the vehicle controller (180) terminates the emergency maneuver procedure responsive to the end-emergency-maneuver command,

9. The system (10) of claim 7 or 8, wherein the positively invariant set is an augmented positively invariant set defining an extended protection zone (135), and wherein during the emergency maneuver procedure, the vehicle (100) stays within the expanded protection zone.

10. The system (10) of claim 7 or 8, wherein the collision avoidance system is a decentralized collision avoidance system (10) for vehicles (310) moving in coordinated operations.

100

S102 — Receive a buffer zone boundary input defining a buffer zone at an on-board processor from a controlling supervisor or some other external entity

S104 — Calculate a positively invariant set based on vehicle states and dynamic characteristics

S106 — Augment the invariant set to define an expanded protection zone

S108 — Determine if an object is traversing the buffer zone boundary

S110 — Initiate an emergency maneuver procedure after primary collision avoidance maneuvers fail

Figure 1

200

| Establish an emergency maneuver command for the vehicle based on dynamical characteristics of the vehicle | S202 |

| Program the emergency maneuver command into the vehicle controller | S204 |

**Figure 2**

EP 1 764 628 A2

**300**

| | S302 |
|---|---|
| Determine an object-detected time when the object traverses the buffer zone boundary | |

↓

| | S304 |
|---|---|
| Initiate collision avoidance maneuver to avoid collision with the object | |

↓

| | S306 |
|---|---|
| Determine the object is within the buffer zone boundary after a preset time threshold has elapsed and activate emergency maneuver | |

↓

| | S308 |
|---|---|
| Receive an end-emergency-maneuver command if collision is successfully avoided | |

↓

| | S310 |
|---|---|
| Terminate the emergency maneuver procedure | |

**Figure 3**

Figure 4

Figure 5

Figure 6

Figure 7B

Figure 7A

Figure 7D

Figure 7C

Figure 8A

Figure 8B

EP 1 764 628 A2

Figure 9B

Figure 9A

Figure 9D

Figure 9C